# EUROPEAN PATENT SPECIFICATION

(11) **EP 2 948 394 B1**
(45) Date of publication and mention of the grant of the patent: **30.10.2019**
(21) Application number: 14703415.1
(22) Date of filing: 16.01.2014
(51) Int. Cl.: B65G 1/137

(54) **METHOD FOR PUTTING TOGETHER COLLECTIONS OF ORDERED ARTICLES AND SET OF CONVEYOR LINES APPLICABLE THEREIN**
VERFAHREN ZUM ZUSAMMENFÜHREN VON SAMMLUNGEN AUS GEORDNETEN ARTIKELN UND DAFÜR VERWENDBARE FÖRDERLEITUNGEN
PROCÉDÉ POUR RASSEMBLER DES COLLECTIONS D'ARTICLES COMMANDÉS ET ENSEMBLE DE LIGNES DE TRANSPORTEUR APPLICABLES DANS CELUI-CI

(30) Priority: 23.01.2013 BE 201300045
(43) Date of publication of application: 02.12.2015
(73) Proprietor: Bellivo, Société Anonyme, 1930 Luxembourg (LU)
(72) Inventor: OEYEN, Jan, B-2250 Olen (BE)
(74) Representative: Kamphuis, Albertus Johannes
(86) International application number: PCT/IB2014/000041
(87) International publication number: WO 2014/115012

(56) References cited:
- DE-A1-102004 014 378
- US-A- 5 983 648
- US-A1- 2004 200 692

## Description

The present invention relates to a method for putting together collections of ordered articles .

The putting together of a collection of ordered articles, i.e. physically bringing together articles that must be supplied to a certain delivery address, is an activity that occurs very often in a distribution chain, for example in a wholesale business for fresh goods.

Traditionally this is done by 'order picking' from a warehouse.

Articles are hereby supplied in substocks that comprise articles of a certain type, for example in the form of pallets or boxes of a certain article type supplied by suppliers or by a production department, and are then placed in a warehouse, sorted by article type, and when a collection of ordered articles has to be put together, are taken out of the warehouse on the basis of the order.

Such activities can be done by people, whereby such a traditional method is expensive due to the large quantity of operations and movements that these people have to make, or they can be done by automated devices, whereby the investment costs of such an installation are high.

Also, both with implementation by people and with implementation by an automated device, a sufficiently large warehouse must be provided, in order to have enough space for the largest possible quantity of each article type that can be present and to have the necessary access space to the storage places of all article types.

Also records must be kept of warehouse locations where a certain article type is stored.

In certain cases, for example with fresh products that have to be kept cool, certain conditions must prevail in this warehouse, for example a low temperature, whereby it is difficult to maintain these conditions due to the frequent movements in and out of the warehouse. This makes maintaining a suitable warehouse even more expensive.

This method is not particularly suitable either for products which, for example in view of their freshness, have to be supplied on a FIFO (First In, First Out) basis, because particular attention must be paid to each separate storage place allocated to a certain article type in order to operate according to a FIFO system.

A known method for putting together collections of ordered articles is disclosed in DE10 2004 014 378 A1.

This discloses a method for putting together collections of ordered articles from a stock that comprises substocks of these articles, whereby the method comprises:
selecting a substock of ordered articles in a selection step, the selection step comprising determining whether there is an order for this article, whereby if this is the case the substock is sent to an order picking step,
whereby the order picking step means that this article is taken from the substock and is allocated to an order and the article is placed in an auxiliary stock,
whereby the selection step is repeated with a subsequent substock until all ordered articles have been allocated to all outstanding orders,
and, after at least one auxiliary stock has been put together, bringing articles from an auxiliary stock or auxiliary stocks that have been allocated to a specific order together into collections of ordered articles.

The purpose of the present invention is to provide a solution to at least one of the aforementioned and other disadvantages, by providing a method as specified in claim 1.
The activity of allocating an article to an order consists of physically linking the article and an identification means together that is provided with data that directly, or by means of a data file, identify the intended recipient of the article.

This can be a permanent link, for example by means of a label or electronic identification or permanent packaging that is associated with the article, or a temporary link, for example by means of a container in which the article is placed, whereby this container is provided with a label or an electronic identification.

In principle, but not necessarily, the stock is hereby the entire stock of the possible articles to be ordered that are available for orders.

Hereby there can be different substocks with the same articles, in different places in the stock.

These substocks are not supplemented with articles, but are only emptied. A subsequent delivery of such an article will form a new substock in the stock.

In principle it is not possible to supplement a substock, because the location of a substock in the stock, and the number of articles in the substock, do not need to be known.

The strength of the method primarily lies in the fact that knowledge of the location and the size of the substocks is not necessary, because all substocks in the entire stock, in any case until the orders have been filled, undergo the selection step, irrespective of the order status of the articles in the substock.

This means that the method is continued until either all substocks have been processed, irrespective of whether all ordered articles have been allocated, or until a signal is given that all ordered articles for all orders have already been allocated, in which case the further continuation of the method serves no purpose with regard to the objective of forming collections of ordered goods.

Because with this method the substocks do not have to be directly accessible, they can be stored much more compactly, i.e. without access space and directly next to or on top of one another, such that the necessary storage space is much smaller than with the traditional method.

Attention to, and records of, the location of the substocks of the articles are not necessary. The articles can be in the stock arbitrarily, not necessarily grouped by article type.

They can even be in the stock per individual article, mixed with other article types, in which case the substocks have a size of only one article.

Also the number of different movements that have to be done with the articles are much lower, so that few people and/or only a simple infrastructure is required to implement this method.

Also, because the selection step can easily be done automatically, knowledge of the articles and the language in which the articles and/or warehouse locations are described, is not necessary for the people who implement the method, such that no specific training is required.

In preferred variants the substocks are handled individually and after one another in the selection step and/or the method is implemented until all substocks in the stock have undergone the selection step and/or a handling sequence is allocated to the substocks in the stock and they are handled in the order of this sequence, whereby, as long as they are not exhausted in the selection step, they will be handled in the same sequential order during a repetition of the method.

This has the advantage that thanks to these measures, the FIFO processing of articles in the stock is approximated, whereby a combination of these three measures is necessary to guarantee a FIFO operation.

Moreover, the method is stable with FIFO processing, i.e. in the event of an unintentional error or exchange in the method, the FIFO processing is indeed no longer the case, but this departure from perfect FIFO processing will not persist or become worse in a further consistent application of the method, but will automatically disappear.

It goes without saying that to complete the method, after at least one auxiliary stock has been put together, articles can be brought together from an auxiliary stock or auxiliary stocks into collections of ordered articles on the basis of the data on the label.

The method according to the invention can be implemented manually or entirely or partially automatically.

With the intention of better showing the characteristics of the invention, a preferred embodiment of a set of conveyor lines and a method according to the invention are described hereinafter by way of an example, without any limiting nature, with reference to the accompanying drawings, wherein:
Figure 1 schematically shows a perspective view of a set of conveyor lines ; and
figures 2 to 7 show successive steps of the method according to the invention.

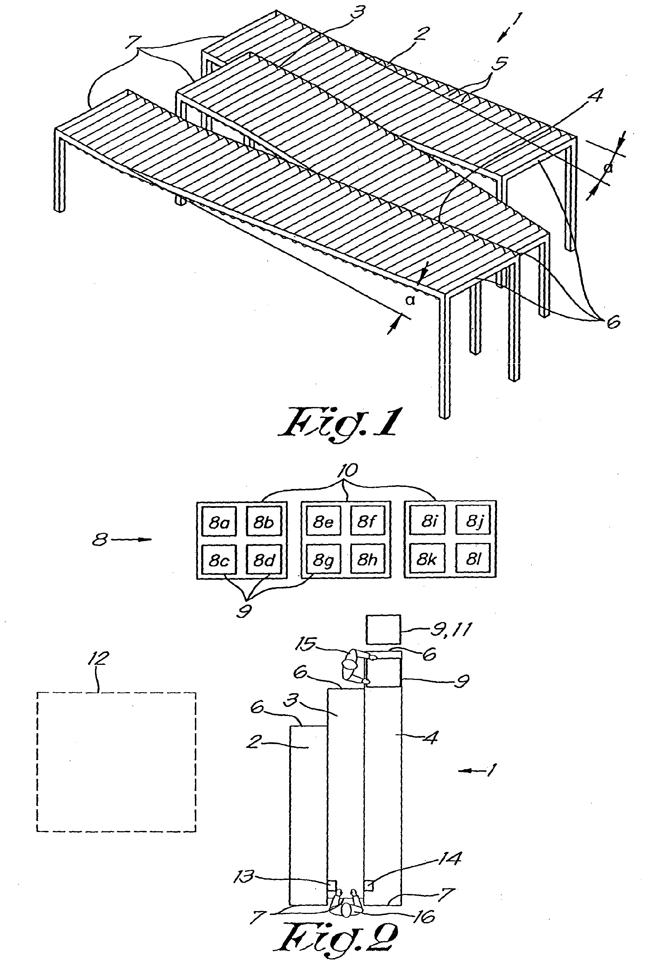

The set of conveyor lines shown in figure 1 in this example consists of a set of roller conveyors 1 for boxes, with three roller conveyors, i.e. a first roller conveyor 2, a second roller conveyor 3, and a third roller conveyor 4, each with freewheel rollers on which boxes can be placed.

The individual roller conveyors 2,3,4 and the set of roller conveyors 1 have a first end 6 and a second end 7. The roller conveyors 2,3,4 are next to and parallel to one another, whereby they are not of the same length and are displaced with respect to one another such that at the first end 6 the second roller conveyor 3 continues further than the first roller conveyor 2, and the third roller conveyor 4 continues further than the second roller conveyor 3, and at the second end 7 the second roller conveyor 3 does not continue as far as the first roller conveyor 2 and the third roller conveyor 4, whereby the first roller conveyor 2 continues just as far as the third roller conveyor 4.

The first roller conveyor 2 and the third roller conveyor 4 slope at an angle α, such that they are higher at the first end 6 than at the second end 7, whereby the angle α is such that a box placed on the roller conveyor 2, 4 can roll to the second end 7 under the influence of gravity. The second roller conveyor 3 slopes in the reverse direction.

Alternatively the roller conveyors can also be driven, and then they do not need to be sloping.

The use of the set of roller conveyors 1 in a method according to the invention is simple and as follows, and shown in figures 2 to 7, which give a top view of a space where the method is implemented.

When the method is started, a stock 8 of articles stands ready, as a collection of substocks 8a-8l that are each in a container in the form of a plastic box 9 on a pallet 10. These articles originate from suppliers, for example.

The first time that the method is implemented a handling sequence is allocated to the substocks 8a-8l, preferably on the basis of the position in which the boxes 9 are located, so that it is easy for people to respect this sequential order without confusion, for example by working from one end of a row to another end of the row.

In this specific example of figure 2 there are twelve substocks, provided in figures 2 to 7 with the designations 8a to 81 inclusive, whereby these designations indicate the allocated handling sequence, whereby in practice these designations are not physically present and the sequential order is determined by the positioning of the boxes 9 in which the substocks 8a-8l are located.

In this example, four boxes 9 fit on a pallet 10, whereby in this variant, but not necessarily, only one type of article is present per box 9. In principle this stock 8 is the entire stock of articles present. The content of each box 9 thus forms a substock 8a-8l of the total stock 8 of articles.

The number of articles per substock 8a-8l, and thus per box 9, can differ, and in the stock 8 there can be more than one substock 8a-8l of the same article type, whereby boxes 9 with substocks 8a-8l of the same article type do not need to be next to one another. The articles are individually provided with a machine-readable identification code, for example a standard barcode that indicates the article type.

A stock 11 of empty boxes 9 also stands ready, and there is a space 12 for placing auxiliary stocks of articles.

A set of roller conveyors 1 is placed with its first end 6 oriented towards the stock 8. Close to the second end 7 a scanner 13 for a barcode and a label printer 14 are provided that are both linked to a computer system that has access to data relating to the orders to be supplied.

The method is essentially implemented by two people, i.e. a first person 15 at the first end 6 of the set of roller conveyors 1, and a second person 16 at the second end 7 of the set of roller conveyors 1.

In a first step the first person 15 takes an empty box 9 from the stock 11 of empty boxes, places it on the third roller conveyor 4 and lets the empty box 9 move to the second end, where the second person 16 picks it up and places it on the second end 7 of the second roller conveyor 3.

The first person 15 then takes the box 9 in which there is a first substock 8a of articles, places it on the first roller conveyor 2 and lets it move to the second end 7.

The second person 16 then performs a selection step on the first substock 8a in this box 9. To this end he takes an article from this box and holds this article under the scanner 13.

The computer system recognises the article type and compares this article type to outstanding orders. From this there comes a decision as to whether or not there is an order for the article type concerned.

If this is the case, a label with the name and delivery data of the customer is printed by the label printer 14, and this label is placed on the article by the second person 16. The article is then placed in the box 9 standing ready on the second roller conveyor 3, and together with any articles already placed in this box 9, thereby forms an auxiliary stock 17 of articles.

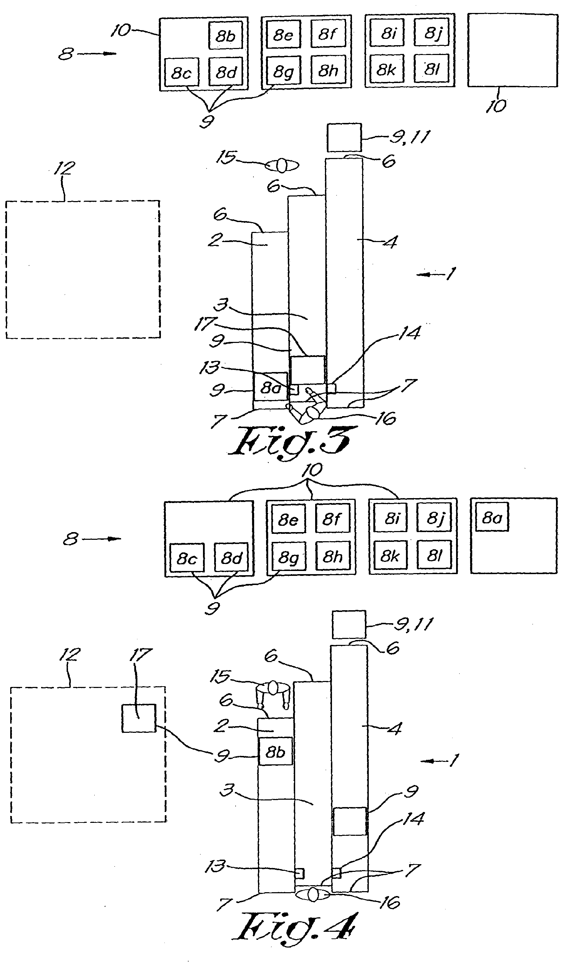

This situation is shown in figure 3.

Alternatively only an identification number of the customer can also be printed, whereby in a later step the delivery data are linked to the article.

This is repeated until either the box 9 of the substock 8a is empty, i.e. the substock 8a is exhausted, or until after scanning an article it is noted by the computer system that there are no further outstanding orders for this article type.

In this case a label is not printed, which is a signal for the second person 16 that the selection step for the substock 8a concerned has been completed, but the second person 16 can also be given an additional signal to this end, for example an audio signal.

If one of the two situations mentioned in the previous paragraph arises, the second person 15 pushes the auxiliary stock 17, thus the box 9 with the labelled articles that is on the second roller conveyor 3, to the first end 6 and also moves the box 9 on the first roller conveyor 2, which either contains one or more articles from the substock 8a, or is empty, to the second roller conveyor 3 and also pushes this box 9 to the first end 6.

In the meantime the first person 15 has already placed the next box 9, with the next substock 8b, on the first roller conveyor 3 and pushed it to the second end 7, and made a next empty box 9 available to the second person 16 via the third roller conveyor 4, after which the second person 16 performs the selection step on the substock 8b.

This is repeated for all substocks 8a-8l in the stock.

Hereby, depending on need, empty pallets 10 on which there were boxes 9 are taken away and empty pallets 10 are placed by, and pallets 10 with boxes 9 are moved to make them more easily accessible. Of course with the imposed sequential order of the substocks 8a-8l in the stock 8 being maintained.

When implementing the method the first person 15 receives boxes 9 via the second roller conveyor 3 from the second end 7, whereby three situations can occur:
1: a box 9 is empty, in which case he places this box 9 among his stock 11 of empty boxes;
2: a box 9 contains articles provided with a label from the label printer 14, in which case he places the box 9 in the space 12 provided for the auxiliary stocks 17;
3: a box 9 contains articles that are not provided with a label from the label printer 14, in which case the box 9 still contains a substock 8a-8l, and he puts the box 9 back behind the stock 8, hereby respecting the imposed sequence of the auxiliary stocks 8a-8l.

Figure 4 shows the situation during the course of the method in which the box 9 with the remaining part of the substock 8a has already put back behind the stock 8, and a box 9 with a second substock 8b is made ready to be moved to the second end 7.

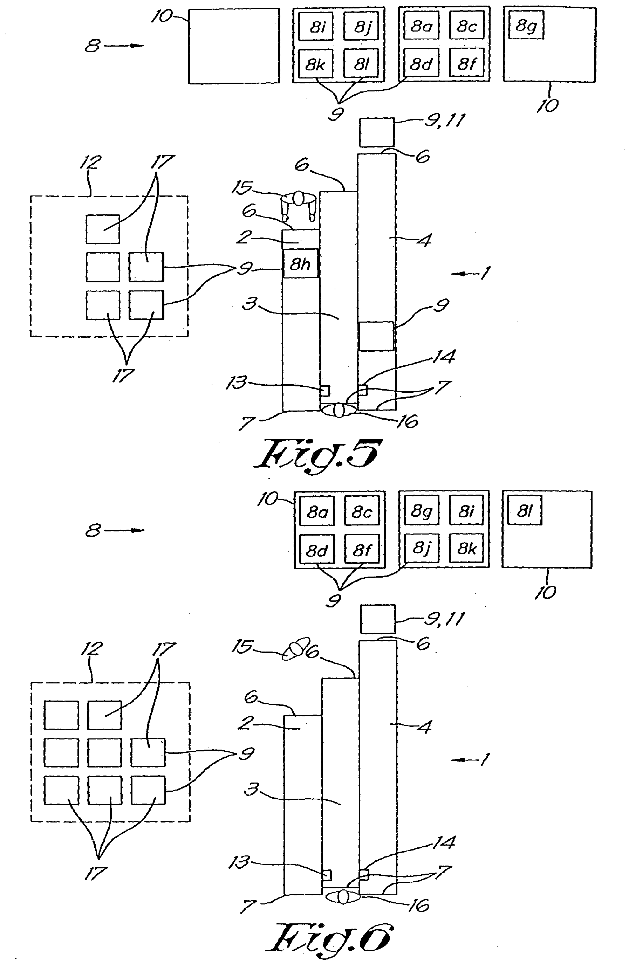

Figure 5 shows the situation in which more than half of the substocks 8a-8l have already gone through the selection step, and in which a box 9 with a substock 8h therein is made ready to be moved to the second end 7. The absence of boxes 9 with substocks 8b and 8e in the stock 8 shows that the substocks 8b and 8e concerned have been completely exhausted during the selection step, thus that there were just as many or more orders for the articles of the type concerned than were actually present in the substock 8b, 8e.

The fact that seven substocks, i.e. 8a to 8g, have already gone through the selection step, while six boxes 9 with auxiliary stocks 17 are standing ready in the space 12 intended for this purpose, shows that there were no orders for the articles in one of the auxiliary stocks 8a-8g.

Figure 6 shows the situation in which all substocks 8a-8l in the stock 8, thus all boxes 9 with substocks, have gone through the selection step. The further absence, compared to figure 5, of substock 8i in the stock 8 shows that the substock 8i was also exhausted during the selection step.

The fact that all twelve substocks 8a-8l have gone through the selection step, while there are eight boxes 9 with auxiliary stocks 17 ready in the space 12 provided for this purpose, shows that there were no orders for article types in four of the substocks 8a-8l.

After all substocks 8a-8l have gone through the selection step, to prepare for a new implementation of the method, any new substocks 8m-8r are placed at the back of the remaining stock 8, i.e. substocks 8m-8r of articles received or manufactured since the start of implementing the method.

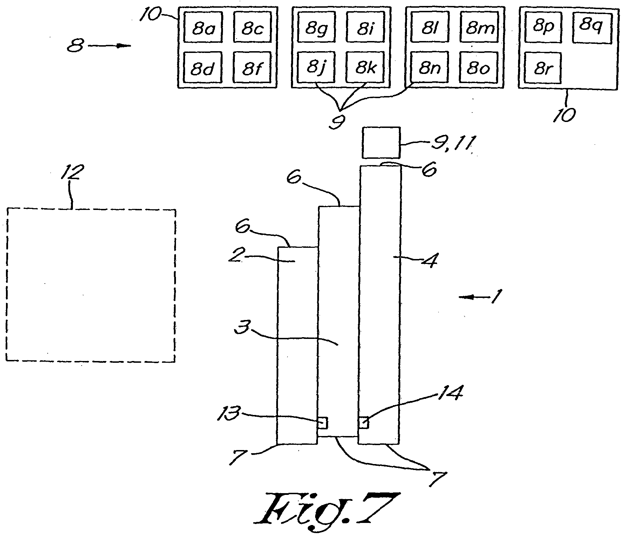

The situation in which the stock 8 is supplemented and ready to be processed again by means of the method is shown in figure 7.

The auxiliary stocks 17 in the space 12 provided to this end now together contain all ordered articles, insofar they were in stock. These articles are all provided with a label with the delivery data thereon.

In a last step the articles in these auxiliary stocks 17 are examined one by one and sorted on the basis of their delivery data, thus placed in a location reserved for articles with these delivery data, or in a container for articles with these delivery data. This can of course be done both manually and automatically.

After they are sorted for articles, collections of ordered articles are formed that can be shipped.

It is emphasised that in this method the people 15, 16 only need to perform routine operations with these articles, whereby they do not need to make any decisions themselves relating to linking an article to an order, and thus do not need to have any product knowledge, and do not need any knowledge of an order or the address or identity data linked thereto, thus for example they do not need to be in a position to be able to read and/or understand its order data.

Although in the above method there are articles per type in a substock, it is also possible to implement the method on the basis of a stock of individual articles. This comes down to substocks of the size of one single article.

Although the above method is based on individual articles in a substock, whereby the articles are scanned individually, in the sense of the method an article can also be packaging with a larger number of individual goods.

Although in the above method articles of the same type and origin from the same substock together form an auxiliary stock, the method can also be implemented in a way in which articles are individually, or together with articles of other types, guided from the selection step to a further process.

Although in the above method articles are packed in the same boxes in all phases of their processing, it is also possible to implement the method for articles of highly diverse sizes, that are not placed in or on temporary containers, or whereby use is made of containers for articles that are not uniform.

Although in the above method the stock of empty boxes at the start of the method is sufficient, and the auxiliary stocks are only further processed if they are all formed, it is also possible to supply new empty boxes during the method, and/or to further process auxiliary stocks as of the moment that they are formed.

Although in the above method the stock is organised as four unstacked boxes on a pallet, this can of course be done in another way, for example by stacking boxes or other containers of products on the pallets or not by using pallets.

It is not necessary either that articles are already in boxes if they are added to the stock. Indeed, a first step by the first person can be that a substock that is not yet in a box, is placed in a box before undergoing the selection step.

It may be that enough substocks have gone through the selection step to allocate all ordered articles to an order. In this case the continuation of the method of course serves no purpose.

In this case a FIFO system can be guaranteed when the substocks that have already been handled in the selection step are put back in the stock again at the front, thus before the substocks that have not yet been handled in the selection step.

Although the articles from a substock that have not been ordered are put back in the substock again, when an article for which there is no order is scanned, the computer system can remember the sequence number of the substock concerned in all substocks where there is at least one article that has not been ordered.

When putting back the substocks into the stock an established sequential order is maintained, an article can later be found quickly on the basis of the sequence number concerned of its substock.

This is especially important for being able to fulfil urgent orders, for which going through the method with the entire stock would involve too much work.

If the number of articles that have to be handled is very large, in principle the method can be implemented in parallel in a number of independent processing units, whereby the articles are grouped together beforehand, for example on the basis of the supplier or on the basis of an article group to which they belong.

Although the method described above is described on the basis of a manual operation by people, the various steps can of course also be entirely or partially automated.

The present invention is by no means limited to the embodiments described as an example and shown in the drawings, but such a method and set of conveyor lines can be realised in different variants, without departing from the scope of the invention.

## Claims

1. Method for putting together collections of ordered articles from a stock (8) that comprises substocks (8a-8l) of these articles, comprising the following steps:
handling substocks (8a-8l), irrespective of the order status of the articles in a substock (8a-8l), in a selection step,
the selection step comprising the following substeps:
A: an article from a substock (8a-8l) is identified by means of a machine-readable identification code affixed against, on or in the article ;
B: it is then determined by means of a computer system whether there is an order for this article, whereby if this is the case step B1 is implemented, after which step A is repeated with a subsequent article from the substock (8a-8l) if this substock (8a-8l) is not exhausted, and if this is not the case step B2 is implemented,
whereby step B1 means that a label is created with data that enable the article to be linked to an order and the article is allocated to an order by fastening this label to or on the article and the article is placed in an auxiliary stock (17),
whereby step B2 means that the article is placed in the substock (8a-8l) again and that the remaining part of the substock (8a-8l) is again placed in the stock (8),
whereby substocks (8a-8l) are handled in the selection step until all ordered articles have been allocated to all outstanding orders or whereby all substocks (8a-8l) are handled in the selection step,
- bringing the articles that have been allocated to a specific order together, by, after at least one auxiliary stock (17) has been put together, bringing articles from an auxiliary stock (17) or auxiliary stocks (17) together into collections of ordered articles on the basis of the data on the label.

2. Method according to claim 1, **characterised in that** the articles are fresh products with a limited possible shelf life.

3. Method according to any one of the previous claims, **characterised in that** a handling sequence is allocated to the substocks (8a-8l) in the stock (8) and that they are handled in this sequential order, whereby, as long as they are not exhausted in the selection step, they are handled in the same sequential order in a repetition of the method.

4. Method according to any one of the previous claims, **characterised in that** use is made of a set of conveyor lines 1 of at least two conveyor lines (2,3) placed in parallel next to one another, whereby a first end (6) of the conveyor lines (2,3) is turned towards the stock and the selection step takes place at a second end (7) of the conveyor lines (2,3), whereby a first conveyor line (2) and a second conveyor line (3) are arranged to transport goods in opposite directions.

5. Method according to claim 4, **characterised in that** containers (9) for a substock (8a-8l) are placed at the first end (6) on the first conveyor line (2) and are transported via this to the second end (7), whereby the auxiliary stock (17) and any remaining part of the substock (8a-8l) are transported in separate containers (9) over the second conveyor line (3) from the second end (7) to the first end (6).

6. Method according to claim 4 or 5, **characterised in that** the set of conveyor lines (1) comprises three conveyor lines (2,3,4), whereby a third conveyor line (4) is arranged to transport goods in the same direction as the first conveyor line (2) and whereby the second conveyor line (3) is between the first conveyor line (2) and the third conveyor line (4), whereby the third conveyor line (4) is used to transport empty containers (9) from its first end (6) to its second end (7).

7. Method according to any one of the claims 4 to 6, **characterised in that** at the second end (7) the first conveyor line (2) continues further than the second conveyor line (3), and if present the third conveyor line (4) does not continue as far as the second conveyor line (3) .

## Patentansprüche

1. Verfahren zum Zusammenführen von Sammlungen aus geordneten Artikeln, aus einem Vorrat (8), der Untervorräte (8a-8l) dieser Artikel umfasst, umfassend die folgenden Schritte:
Handhaben von Untervorräten (8a-8l) ungeachtet des Rangstatus der Artikel in einem Untervorrat (8a-8l) in einem Auswählschritt,
wobei der Auswählschritt die folgenden Unterschritte umfasst:
A: ein Artikel aus einem Untervorrat (8a-8l) wird mittels eines maschinenlesbaren Identifikationscodes identifiziert, der an, auf oder in dem Artikel festgemacht ist;
B: es wird dann mittels eines Computersystems bestimmt, ob es einen Rang für diesen Artikel gibt, wobei wenn dies der Fall ist Schritt B1 ausgeführt wird, nach welchem Schritt A mit einem nächsten Artikel aus dem Untervorrat (8a-8l) wiederholt wird, wenn der Untervorrat (8a-8l) nicht erschöpft ist, und wenn dies nicht der Fall ist Schritt B2 ausgeführt wird,
wobei Schritt B1 bedeutet, dass eine Kennzeichnung mit Daten erzeugt wird, die es ermöglichen, den Artikel mit einem Rang zu verknüpfen, und der Artikel einem Rank zugewiesen wird, indem diese Kennzeichnung an oder auf dem Artikel befestigt wird, und der Artikel in einem Hilfsvorrat (17) platziert wird,
wobei Schritt B2 bedeutet, dass der Artikel wieder in dem Untervorrat (8a-8l) platziert wird, und dass der verbleibende Teil des Untervorrats (8a-8l) wieder in dem Vorrat (8) platziert wird,
wobei Untervorräte (8a-8l) in dem Auswählschritt gehandhabt werden, bis alle geordneten Artikel allen ausstehenden Aufträgen zugewiesen wurden, oder wobei alle Untervorräte (8a-8l) in dem Auswählschritt gehandhabt werden,
- Zusammenbringen der Artikel, die einem spezifischen Rang zugewiesen wurden, indem, nachdem mindestens ein Hilfsvorrat (17) zusammengeführt wurde, Artikel von einem Hilfsvorrat (17) oder Hilfsvorräten (17) auf der Grundlage von Daten auf der Kennzeichnung in Sammlungen aus geordneten Artikeln zusammengebracht werden.

2. Verfahren nach Anspruch 1, **dadurch gekennzeichnet, dass** die Artikel frische Produkte mit begrenzter Haltbarkeit sind.

3. Verfahren nach einem der vorstehenden Ansprüche, **dadurch gekennzeichnet, dass** eine Handhabungsreihenfolge einem der Untervorräte (8a-8l) in dem Vorrat (8) zugewiesen wird, und dass diese in dieser Reihenfolgenordnung gehandhabt werden, wobei sie, solange sie nicht in dem Auswählschritt erschöpft sind, in einer Wiederholung des Verfahrens in derselben Reihenfolgenordnung gehandhabt werden.

4. Verfahren nach einem der vorstehenden Ansprüche, **dadurch gekennzeichnet, dass** ein Satz von Förderleitungen (1) aus mindestens zwei Förderleitungen (2, 3), die parallel neben einander platziert werden, verwendet wird, wobei ein erstes Ende (6) der Förderleitungen (2, 3) dem Vorrat zugewandt ist, und der Auswahlschritt an einem zweiten Ende (7) der Förderleitungen (2, 3) stattfindet, wobei die erste Förderleitung (2) und die zweiten Förderleitung (3) angeordnet sind, um Güter in entgegengesetzte Richtungen zu transportieren.

5. Verfahren nach Anspruch 4, **dadurch gekennzeichnet, dass** Behälter (9) für einen Untervorrat (8a-8l) an dem ersten Ende (6) auf der ersten Förderleitung (2) platziert werden, und über diese zu dem zweiten Ende (7) transportiert werden, wobei der Hilfsvorrat (17) und jedwedes übergebliebenes Teil des Untervorrats (8a-8l) in getrennten Behältern (9) über die zweite Förderleitung (3) von dem zweiten Ende (7) zu dem ersten Ende (6) transportiert werden.

6. Verfahren nach Anspruch 4 oder 5, **dadurch gekennzeichnet, dass** der Satz von Förderleitungen (1) drei Förderleitungen (2, 3, 4) umfasst, wobei eine dritte Förderleitung (4) angeordnet ist, um Güter in dieselbe Richtung zu transportieren wie die erste Förderleitung (2), und wobei die zweite Förderleitung (3) sich zwischen der ersten Förderleitung (2) und der dritten Förderleitung (4) befindet, wobei die dritte Förderleitung (4) verwendet wird, um leere Behälter (9) von ihrem ersten Ende (6) zu ihrem zweiten Ende (7) zu transportieren.

7. Verfahren nach einem der Ansprüche 4 bis 6, **dadurch gekennzeichnet, dass** die erste Förderleitung (2) sich an dem zweiten Ende (7) weiter fortsetzt als die zweite Förderleitung (3), und falls vorhanden die dritte Förderleitung (4) sich nicht so weit fortsetzt wie die zweite Förderleitung (3).

## Revendications

1. Procédé pour rassembler des collections d'articles commandés provenant d'un stock (8) qui comprend des sous-stocks (8a-8l) de ces articles, comprenant les étapes suivantes :
la gestion des sous-stocks (8a-8l), indépendamment du statut de commande des articles dans un sous-stock (8a-8l), dans une étape de sélection,
l'étape de sélection comprenant les sous-étapes suivantes :
A : un article provenant d'un sous-stock (8a-8l) est identifié au moyen d'un code d'identification lisible par machine apposé contre, sur ou dans l'article ;
B : on détermine ensuite au moyen d'un système informatique s'il existe une commande pour cet article, ce par quoi, si tel est le cas, l'étape B1 est mise en œuvre, après quoi l'étape A est répétée avec un article ultérieur provenant du sous-stock (8a-8l) si ce sous-stock (8a-8l) n'est pas épuisé, et si tel n'est pas le cas, l'étape B2 est mise en œuvre,
ce par quoi l'étape B1 signifie qu'une étiquette est créée avec des données qui permettent de lier l'article à une commande et l'article est affecté à une commande par fixation de cette étiquette à ou sur l'article et l'article est placé dans un stock auxiliaire (17),
ce par quoi l'étape B2 signifie que l'article est à nouveau placé dans le sous-stock (8a-8l) et que la partie restante du sous-stock (8a-8l) est à nouveau placée dans le stock (8),
ce par quoi les sous-stocks (8a-8l) sont traités dans l'étape de sélection jusqu'à ce que tous les articles commandés aient été affectés à toutes les commandes en cours ou ce par quoi tous les sous-stocks (8a-8l) sont traités dans l'étape de sélection,
- rassembler les articles qui ont été affectés à une commande spécifique, en rassemblant, après qu'au moins un stock auxiliaire (17) a été constitué, des articles provenant d'un stock auxiliaire (17) ou de stocks auxiliaires (17) en des collections d'articles commandés sur la base des données sur l'étiquette.

2. Procédé selon la revendication 1, **caractérisé en ce que** les articles sont des produits frais avec une durée de conservation possible limitée.

3. Procédé selon l'une quelconque des revendications précédentes, **caractérisé en ce qu'**une séquence de traitement est affectée aux sous-stocks (8a-8l) dans le stock (8) et **en ce qu'**ils sont traités dans cet ordre séquentiel, ce par quoi, tant qu'ils ne sont pas épuisés dans l'étape de sélection, ils sont traités dans le même ordre séquentiel dans une répétition du procédé.

4. Procédé selon l'une quelconque des revendications précédentes, **caractérisé en ce que** l'on utilise un ensemble de lignes de transport 1 d'au moins deux lignes de transport (2, 3) placées en parallèle l'une à côté de l'autre, ce par quoi une première extrémité (6) des lignes de transport (2, 3) est tournée vers le stock et l'étape de sélection a lieu au niveau d'une deuxième extrémité (7) des lignes de transport (2, 3), ce par quoi une première ligne de transport (2) et une deuxième ligne de transport (3) sont disposées pour transporter les marchandises dans des directions opposées.

5. Procédé selon la revendication 4, **caractérisé en ce que** des contenants (9) pour un sous-stock (8a-8l) sont placés au niveau de la première extrémité (6) sur la première ligne de transport (2) et sont transportés par celle-ci jusqu'à la deuxième extrémité (7), ce par quoi le stock auxiliaire (17) et toute partie restante du sous-stock (8a-8l) sont transportés dans des contenants séparés (9) sur la deuxième ligne de transport (3) de la deuxième extrémité (7) à la première extrémité (6).

6. Procédé selon la revendication 4 ou 5, **caractérisé en ce que** l'ensemble de lignes de transport (1) comprend trois lignes de transport (2, 3, 4), ce par quoi une troisième ligne de transport (4) est disposée pour transporter les marchandises dans la même direction que la première ligne de transport (2) et ce par quoi la deuxième ligne de transport (3) est située entre la première ligne de transport (2) et la troisième ligne de transport (4), ce par quoi la troisième ligne de transport (4) est utilisée pour transporter des contenants vides (9) de sa première extrémité (6) à sa deuxième extrémité (7).

7. Procédé selon l'une quelconque des revendications 4 à 6, **caractérisé en ce que**, au niveau de la deuxième extrémité (7), la première ligne de transport (2) va plus loin que la deuxième ligne de transport (3), et si présente, la troisième ligne de transport (4) ne va pas aussi loin que la deuxième ligne de transport (3).
